# EUROPEAN PATENT SPECIFICATION

(11) **EP 4 370 831 B1**
(45) Date of publication and mention of the grant of the patent: **14.01.2026**
(21) Application number: 22737979.9
(22) Date of filing: 07.07.2022
(51) Int. Cl.: F23G 7/06, B01D 53/70, F23D 14/02, F23D 14/12

(54) **INLET ASSEMBLY FOR AN ABATEMENT APPARATUS**
EINLASSANORDNUNG FÜR EINE REDUKTIONSVORRICHTUNG
ENSEMBLE D'ENTRÉE POUR APPAREIL DE RÉDUCTION DE POLLUTION

(30) Priority: 13.07.2021 GB 202110051
(43) Date of publication of application: 22.05.2024
(73) Proprietor: Edwards Limited, Burgess Hill, Sussex RH15 9TW (GB)
(72) Inventor: BOWEN, Aaron, Clevedon Somerset BS21 6TH (GB); SEELEY, Andrew James, Clevedon Somerset BS21 6TH (GB)
(74) Representative: Norton, Ian Andrew
(86) International application number: PCT/GB2022/051747
(87) International publication number: WO 2023/285781

(56) References cited:
- EP-A1- 1 129 763
- EP-A1- 2 132 485
- WO-A2-2007/053626

## Description

### FIELD OF THE INVENTION

The field of the invention relates to an inlet assembly for an abatement apparatus.

### BACKGROUND

Abatement apparatus, such as radiant burners or other types of abatement apparatus, are known and are typically used for treating an effluent gas stream from a manufacturing processing tool used in, for example, the semiconductor or flat panel display manufacturing industry. During such manufacturing, residual perfluorinated compounds (PFCs) and other compounds exist in the effluent gas stream pumped from the process tool. PFCs are difficult to remove from the effluent gas and their release into the environment is undesirable because they are known to have relatively high greenhouse activity.

Known radiant burners use combustion to remove the PFCs and other compounds from the effluent gas stream, such as that described in EP 0 694 735 and EP 1 129 763.

Typically, the effluent gas stream is a nitrogen stream containing PFCs and other compounds. The effluent stream is conveyed into a combustion chamber that is laterally surrounded by the exit surface of a foraminous gas burner. In some cases treatment materials, such as fuel gas, can be mixed with the effluent gas stream before entering the combustion chamber. Fuel gas and air are simultaneously supplied to the foraminous burner to affect combustion at the exit surface. The products of combustion from the foraminous burner react with the effluent stream mixture to combust compounds in the effluent stream.

Although arrangements of abatement apparatus exist, they each have their own shortcomings. Accordingly, it is desired to provide an improved arrangement for abatement apparatus.

### SUMMARY

According to the invention, there is provided an inlet assembly for an abatement apparatus for treating an effluent stream from a semiconductor processing tool according to claim 1.

This recognizes that a problem with abatement apparatus is that each combustion chamber needs to be carefully configured to suit the effluent stream flow rates and types to ensure adequate abatement. This means that a variety of, often bespoke, parts are required to be produced in order to provide an abatement apparatus suitable to be operated under a variety of different conditions. For example, the arrangement of the delivery nozzles which deliver the effluent stream into the abatement chamber can vary, depending on the effluent stream and/or its flow rate. Also, the size of the abatement chambers can vary. Having differing configuration delivery nozzles and abatement chambers can be problematic since this can lead to requiring different configuration parts, which increases the inventory of parts required to produce and maintain such abatement apparatus.

Accordingly, the inlet assembly according to Claim 1 is provided. This enables a common head to be used for different combustion chamber modules, which reduces the number of parts required for the assembly and maintenance of the abatement apparatus.

The plenum may surround the combustion charge chamber. The feed apertures may be located to overlie or align with the plenum. Hence, the feed apertures may be positioned to align with the plenum.

The feed apertures may be located to extend or be positioned around a perimeter or periphery of the mount.

The inlet assembly comprises a plurality of combustion chamber modules. Each combustion chamber module has a mount which is configured to interface with a corresponding one of a plurality of galleries of the common head. Each mount comprises a plurality of feed apertures positioned for fluid communication of the combustion reagents between that gallery and a corresponding plenum. Hence, the common head is provided with a number of separate galleries, each of which supplies combustion reagents do a corresponding combustion chamber module through its mount. This enables each combustion chamber module to be fed independently of the others.

Each combustion chamber module may be configured or arranged to receive or have located therewithin at least one effluent stream nozzle which may extend from the common head. The feed apertures may be located to avoid a position of each effluent stream nozzle. Hence, effluent stream nozzles may extend through the common head and through the mount, with the feed apertures being positioned away from the location of the effluent stream nozzles.

The mount may define at least one effluent stream nozzle aperture. The effluent stream nozzle aperture may be positioned or located to receive a corresponding effluent stream nozzle. Hence, the effluent stream nozzle may extend from the common head and through the mount to the combustion chamber.

The mount may comprise at least one effluent stream nozzle seal which is positioned to surround each corresponding effluent stream nozzle.

Each effluent stream nozzle seal may be configured to fluidly isolate a corresponding effluent stream nozzle from the combustion reagents.

The combustion chamber module may comprise at least one effluent stream nozzle seal grove which is configured to receive a corresponding effluent stream nozzle seal.

The feed apertures may be located or positioned to avoid each effluent stream nozzle seal.

The mount may comprise a perimeter seal which may be configured to contain the combustion reagents.

The common head may be configured to removably provide at least one additional effluent stream nozzle for enhanced combustion chamber modules. The nozzle may extend from the common head. Hence, the common head may provide additional effluent stream nozzles when required, but those additional effluent stream nozzles may be removed when they are not required. This enables the common head to support different types of combustion chamber modules.

The combustion chamber module may be an enhanced combustion module. The mount may be configured to receive at least one additional effluent stream nozzle extending from the common head. The feed apertures may be located to avoid a position of each additional effluent stream nozzle. Hence, the feed apertures are positioned away from the location of any of the effluent stream nozzles that may extend from the common head.

The mount of the enhanced combustion chamber module may be configured or arranged to receive a plurality of effluent stream nozzles extending from the common head.

The mount of the enhanced combustion chamber module may be configured or arranged to interface with a plurality of galleries of the common head.

The combustion chamber module may be other than the enhanced combustion chamber module. When this is the case, the perimeter seal may be located to deviate to avoid a location of the at least one additional stream nozzle.

The mount of the other than the enhanced combustion chamber module may be configured or arranged to receive a single effluent steam nozzle extending from the common head.

The mount of the other than the enhanced combustion chamber module may be configured to interface with a single gallery of the common head.

Each perimeter seal may follow a joggling or non-linear path to avoid at least one additional effluent stream nozzle.

The feed apertures may be positioned to avoid the perimeter seal.

The feed apertures may be located to follow a deviating path extending around the perimeter of the mount.

The inlet assembly may comprise the common head having an inlet configured to feed the combustion reagents effluent stream to the gallery.

The inlet assembly may comprise the common head to having a plurality of inlets configured to feed the effluent to a corresponding plurality of galleries.

The inlet assembly may comprise the combustion chamber modules.

The inlet assembly may comprise the effluent stream nozzle.

The combustion chamber module may comprise a foraminous sleeve configured or arranged to define the combustion chamber.

There may be provided an abatement apparatus comprising the inlet assembly according to the invention.

The abatement apparatus may comprise the features of the inlet assembly set out above.

There may be provided a method, not according to the invention, comprising: providing a combustion chamber module defining a plenum configured to supply combustion reagents to its combustion chamber and a mount configured to interface with a common head which defines at least one gallery configured to supply the combustion reagents; and providing the mount with a plurality of feed apertures positioned for fluid communication of the combustion reagents between the gallery and the plenum. The method may comprise surrounding the combustion chamber with the plenum surrounds and locating the feed apertures to overlie the plenum.

The method may comprise locating the feed apertures to extend around a perimeter of the mount.

The method may comprise providing a plurality of the combustion chamber modules; configuring each mount to interface with a corresponding one of a plurality of galleries of the common head; and positioning a plurality of feed apertures of each mount for fluid communication of the combustion reagents between that gallery and a corresponding plenum.

The method may comprise configuring the mount of at least one combustion chamber module to interface with a plurality of galleries of the common head and positioning a plurality of feed apertures positioned of the mount for fluid communication of the combustion reagents between those galleries and its plenum.

The method may comprise configuring each combustion chamber module to receive at least one effluent stream nozzle extending from the common head and locating the feed apertures to avoid a position each effluent stream nozzle.

The method may comprise defining at least one effluent stream nozzle aperture with the mount defines and positioning the at least one effluent stream nozzle aperture to receive a corresponding effluent stream nozzle.

The method may comprise providing the mount with at least one effluent stream nozzle seal and positioning the at least one effluent stream nozzle seal to surround each corresponding effluent stream nozzle.

The method may comprise configuring each effluent stream nozzle seal to fluidly isolate a corresponding effluent stream nozzle from the combustion reagents.

The method may comprise receiving an effluent stream nozzle seal in a corresponding at least one effluent stream nozzle seal groove.

The method may comprise locating the feed apertures to avoid each effluent stream nozzle seal.

The method may comprise providing the mount with a perimeter seal and configuring the perimeter seal to contain the combustion reagents.

The method may comprise configuring the common head to removably provide at least one additional effluent stream nozzle extending from the common head for enhanced flow combustion chamber modules.

The method may comprise providing the combustion chamber module as an enhanced combustion chamber module, configuring the mount to receive at least one additional effluent stream nozzle extending from the common head and locating feed apertures to avoid a position each additional effluent stream nozzle.

The method may comprise configuring the mount of the enhanced combustion chamber module to receive a plurality of effluent stream nozzles extending from the common head.

The method may comprise configuring the mount of the enhanced combustion chamber module to interface with a plurality of galleries of the common head.

The method may comprise, when the combustion chamber module is other than the enhanced combustion chamber module, deviating the perimeter seal to avoid a location of the at least one additional effluent stream nozzle.

The method may comprise configuring the mount of the other than the enhanced combustion chamber module to receive a single effluent stream nozzle extending from the common head.

The method may comprise configuring the mount of the other than the enhanced combustion chamber module to interface with a single gallery of the common head.

The method may comprise following joggling path with each perimeter seal to avoid the at least one additional effluent stream nozzle.

The method may comprise positioning the feed apertures to avoid the perimeter seal.

The method may comprise locating the feed apertures to follow a deviating path extending around the perimeter of the mount.

The method may comprise providing the common head having an inlet configured to feed the combustion reagents to the gallery.

The method may comprise providing the common head having a plurality of inlets configured to feed the combustion reagents to a corresponding plurality of galleries.

The method may comprise providing the combustion chamber modules.

The method may comprise providing the effluent stream nozzle.

The method may comprise providing the combustion chamber module comprising a foraminous sleeve configured to define the combustion chamber.

Particular and preferred aspects are set out in the accompanying independent and dependent claims.

### BRIEF DESCRIPTION OF THE DRAWINGS

Embodiments of the present invention will now be described further, with reference to the accompanying drawings, in which:
FIG. 1A-C are sectional perspective views of components of a modular abatement apparatus according to one embodiment;
FIG. 2 illustrates components of an abatement apparatus according to one embodiment;
FIG. 3 illustrates the mounts in more detail according to one embodiment;
FIG. 4 illustrates components of an abatement apparatus according to one embodiment; and
FIG. 5 illustrates the mounts in more detail according to one embodiment.

### DESCRIPTION OF THE EMBODIMENTS

Before discussing the embodiments in any more detail, first an overview will be provided. Embodiments provide an arrangement which utilises one or more common head configurations which can be used to support different types of combustion chamber modules. The common head is provided with at least one aperture through which inlet nozzles extend to convey one or more effluent streams to the combustion chambers of the combustion chamber modules. The common head at least partially defines galleries into which combustion reagents are provided. Each combustion chamber module is provided with a mount which interfaces that combustion chamber module to the common head. The mount is provided with at least one aperture through which the inlet nozzles pass to allow full fluid communication of the effluent stream into the combustion chamber of that combustion chamber module. The combustion chamber is typically defined by a foraminous sleeve which defines a plenum between that foraminous sleeve and a housing of the combustion chamber module which is used to convey the combustion reagents for ignition on an inner surface of the sleeve, within the combustion chamber. The mount is provided with feed apertures which feed the combustion reagents from the gallery and into the plenum. These feed apertures are located on the mount at positions which both overlie the plenum and avoid the location of other structures within the common head, such as inlet nozzles, sight glasses, pilot feeds, purge feeds and the like. This enables combustion chamber modules and mounts of different configurations to be assembled with a common head which helps to reduce the inventory of parts required for different configurations of abatement apparatus.

### Abatement Apparatus

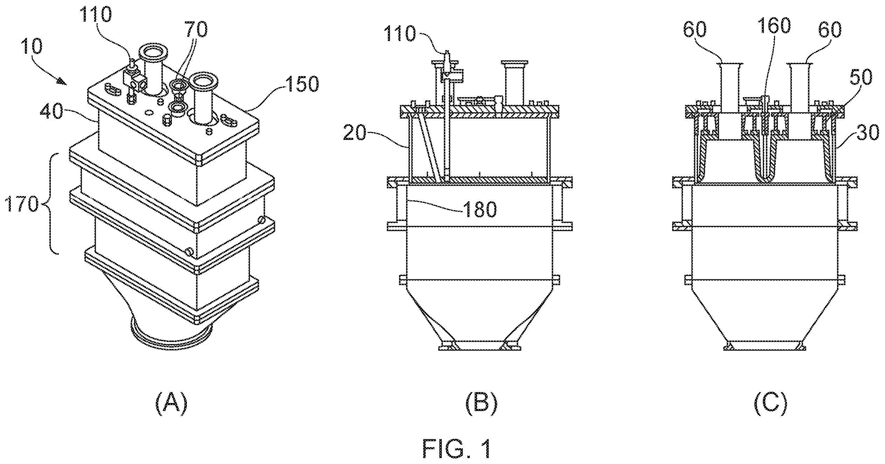

FIG. 1A is a perspective view of components of a modular abatement apparatus 10 according to one embodiment. FIG. 1B is a sectional view through FIG. 1A providing a sectional view of a pilot module 20. FIG. 1C is a cross-sectional view through FIG. 1A providing a sectional view of the combustion chamber modules 30. FIG. 1D is sectional view showing the combustion chamber modules 30 in more detail.

A housing 40 is provided which defines a common housing chamber within which combustion chamber modules 30 are provided (label also in Fig 1C). A common head 150 is provided which covers an upstream opening of the housing 40. The head 150 receives effluent stream inlets 60 for supplying an effluent stream, combustion reagent inlets 70 for supplying combustion reagents such as fuel, a pilot module inlet 110 for supplying fuel and a purge inlet 160 for supplying an inter-module purge gas such as nitrogen. Downstream of the housing 40 is a weir 170 which defines a wetted wall chamber 180 which in operation has walls over which a fluid such as water flows. In this example, there are two combustion chamber modules 30 arranged linearly within the housing 40, however as will be explained in more detail below, different configurations of combustion chamber modules 30 are possible which share a common housing and common head.

Between the head 150 and the combustion chamber modules 30 is provided a mount 50 which retains the combustion chamber modules 30 in place within the housing 40. The depth of this mount 50 can vary to accommodate different length combustion chamber modules 30 while still ensuring that each combustion chamber modules 30 discharges at the same position into the weir 170.

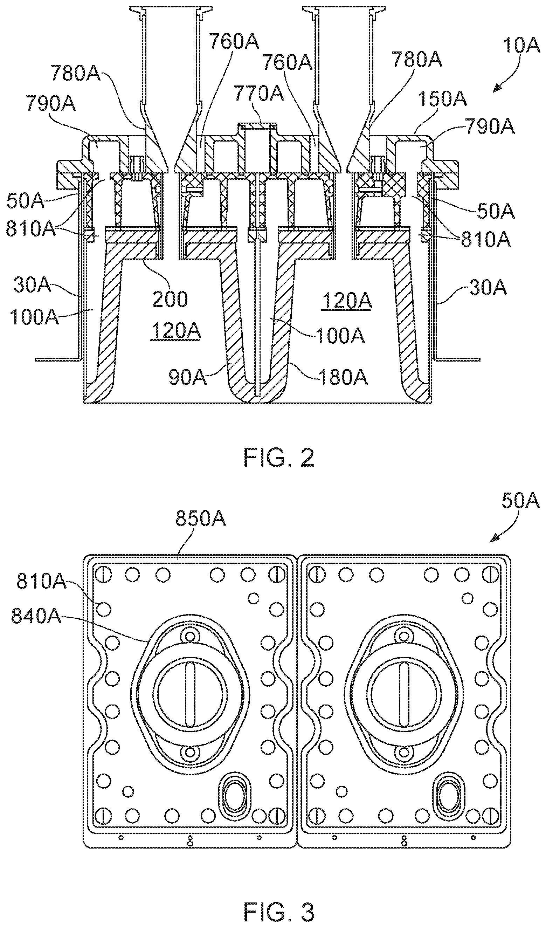

The combustion chamber module 30 has a module housing 80 within which is fitted a foraminous sleeve 90. The foraminous sleeve 90 defines a combustion chamber 120 within which the supplied effluent stream is treated. Each combustion chamber module 30 is provided with an effluent stream inlet 60 which conveys an effluent stream to be treated into the combustion chamber of that combustion chamber module 30. The foraminous sleeve 90 is spaced away slightly from the module housing 80 to define a plenum 100. Combustion reagent inlets 70 convey treatment materials such as fuel through the mount 50 and into the plenum 100 of the respective combustion chamber module 30. Hence, each combustion chamber module 30 is essentially self-contained and its operation has no effect on other combustion chamber modules 30 within the housing 40. FIG. 2 illustrates components of an abatement apparatus 10A according to one embodiment. A common head 150A is provided which defines apertures 760A, 770A, which are dimension to receive inlet assemblies. In this example, the apertures 760A receive an inlet assembly 780A, while the aperture 770A is unused and so remains unfiled or blanked off. The common head 150A defines a gallery 790A which has an inlet (not shown) which receives combustion reagents, in this case fuel and an oxidant.

A pair of mounts 50A are provided which attach to the downstream surface of the common head 150A. Each mount 50A is provided with feed apertures 810A which extend through the mount 50A. A combustion chamber module 30A attaches to the downstream surface of each mount 50A. The combustion chamber module 30A has an aperture which receives the inlet assembly 780A. The combustion chamber module 30A also contains a foraminous sleeve 90A which has an upstream ceiling 200 and depending, diverging walls 180A which define a combustion chamber 120A. An outer surface of the foraminous sleeve 90A and an inner surface of a housing retaining the combustion chamber module 30A defines a plenum 100A. The feed apertures 810A are located to overlie the plenum 100A.

FIG 3. illustrates the mounts 50A in more detail. Each mount 50A is provided with a seal 840A which surrounds the inlet assembly 780A and cooperates with the common head 150A. Additionally, a peripheral seal 850A extends around the perimeter of the mount 50A and also cooperates with the common head 150A. These seals 840A, 850A in cooperation with the common head 150A retain the combustion reagents in the area between the seals, within the gallery 790A. Hence, all of the feed apertures 810A are located between these seals 840A, 850A and are each supplied with combustion reagents. The feed apertures 810A are located generally around the perimeter of the mount 50A to overlie an upstream portion of the plenum 100A. However, in order to avoid the location of the apertures 770A (which in this case are unused), both the feed apertures 810A and the peripheral seal 850A deviates away from the location of the apertures 770A. That is to say that the feed apertures 810A and the peripheral seal 850A are positioned along a joggling, non-linear path in the vicinity of the apertures 770A.

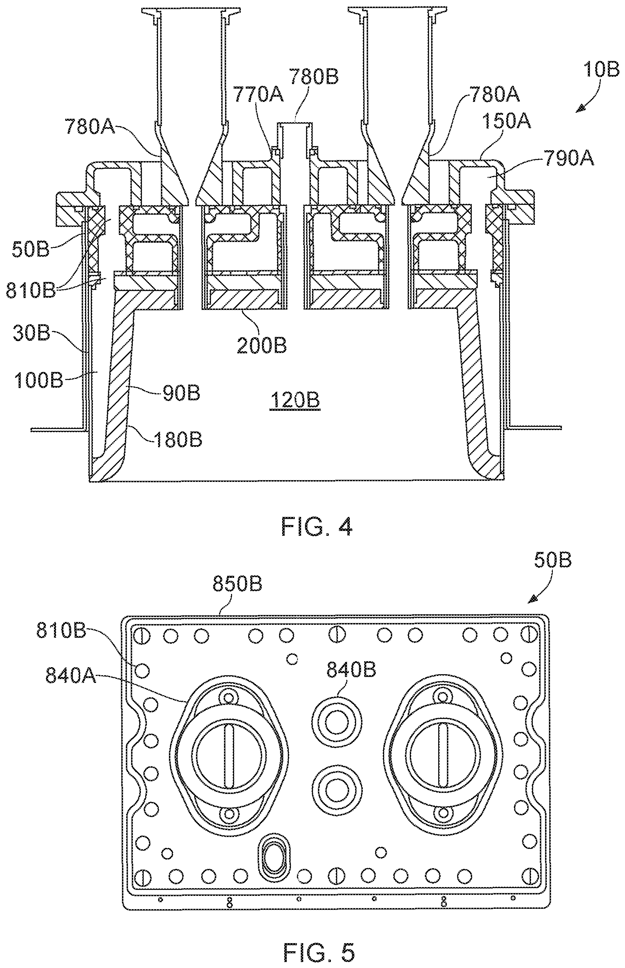

FIG. 4 illustrates components of an abatement apparatus 10B according to one embodiment. This arrangement is similar to that described above and has the same common head 150A. However, in this arrangement further inlet assemblies 780B are provided which are received by the apertures 770A and a single mount 50B is provided which retains a single combustion chamber module 30B.

The mount 50B attaches to the downstream surface of the common head 150A. The mount 50B is provided with feed apertures 810B which extend through the mount 50B. The combustion chamber module 30B attaches to the downstream surface of the mount 50B. The combustion chamber module 30B has apertures which receives the inlet assemblies 780A, 780B. The combustion chamber module 30B also contains a foraminous sleeve 90B which has an upstream ceiling 200B and depending, diverging walls 180B which define a combustion chamber 120B. An outer surface of the foraminous sleeve 90B and an inner surface of a housing retaining the combustion chamber module 30B defines a plenum 100B. The feed apertures 810B are located to overlie the plenum 100B. FIG 5. illustrates the mount 50B in more detail. The mount 50B is provided with a seal 840A which surrounds the inlet assemblies 780A and a seal 840B which surrounds the inlet assemblies 780B and cooperates with the common head 150A. Additionally, a peripheral seal 850B extends around the perimeter of the mount 50B and also cooperates with the common head 150A. These seals 840A, 840B, 850B in cooperation with the common head 150A retain the combustion reagents in the area between the seals, within the gallery 790A. Hence, all of the feed apertures 810B are located between these seals 840A, 840B, 850B and are each supplied with combustion reagents. The feed apertures 810B are located generally around the perimeter of the mount 50B to an overlie an upstream portion of the plenum 100B. However, both the feed apertures 810B and the peripheral seal 850B also deviate away from a possible location of further apertures. That is to say that the feed apertures 810B and the peripheral seal 850B are positioned along a joggling, non-linear path in the vicinity of the possible location of further apertures.

Hence, it can be seen that different configuration combustion chamber modules can be attached to the same common head using different configuration mounts, without interfering with the supply of combustion reagents to their plenum(s).

The invention provides a modular architecture for abatement systems which allows standard burner elements to be tessellated to form an array of different system configurations. This provides a harmonised design whereby combinations and permutations of burner elements can form a leak-tight seal to a common head, thereby reducing inventory and allowing upgrade / future proofing. Unlike existing approaches which required a different head for each combination and permutation of modules since there is overlap between the inter-module purge region with premix supply regions and both of these coincide with the positions of the auxiliary inlets on a double width module, the invention provides a new geometry that circumvents these problems, allowing a significant reduction in cost / complexity / design work. Joggling the seal groove and relocating a number of fuel-air premix ports allows commonality of seal locations. In particular, the seals around the auxiliary inlets in a double module coincide with the joggles in the peripheral sealing groove.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

### REFERENCE SIGNS

Abatement apparatus 10; 10A; 10B
Pilot module 20
Combustion chamber modules 30; 30A; 30B
Housing 40
Mount 50; 50A; 50B
Effluent stream inlets 60
Combustion reagent inlets 70
Module housing 80
Foraminous sleeve 90; 90A; 90B
Plenum 100; 100A; 100B
Pilot module inlet 110
Combustion chamber 120; 120A; 120B
Common head 150; 150A
Purge inlet 160
Weir 170
Wetted wall chamber 180
Walls 180A; 180B
Ceiling 200; 200B
Apertures 760A, 770A
Inlet assembly 780A; 780B
Gallery 790A
Feed apertures 810A; 810B
Seal 840A; 840B
Peripheral seal 850A; 850B

## Claims

1. An inlet assembly (780A; 780B ) for an abatement apparatus (10; 10A; 10B) for treating an effluent stream from a semiconductor processing tool, said inlet assembly comprising:
a plurality of combustion chamber modules (30; 30A; 30B), each defining a corresponding plenum configured to supply combustion reagents to its corresponding combustion chamber, a common head defining a plurality of galleries configured to supply said combustion reagents, each of said plurality of
combustion chamber modules having a corresponding mount (50; 50A; 50B) configured to interface with
a corresponding one of the plurality of galleries of said common head and
wherein each corresponding mount comprises a plurality of corresponding feed apertures positioned for
fluid communication of said combustion reagents between that corresponding one of the plurality of galleries and
a corresponding plenum (100; 100A; 100B).

2. The inlet assembly of claim 1, wherein each corresponding plenum (100; 100A; 100B ) surrounds its corresponding combustion chamber (120; 120A; 120B ) and said corresponding feed apertures are located to overlie said corresponding plenum.

3. The inlet assembly of claim 1 or 2, wherein said corresponding feed apertures (760A,
770A) are located to extend around a perimeter of said corresponding mount.

4. The inlet assembly of any preceding claim, wherein said corresponding mount of at least one combustion chamber module is configured to interface with a plurality of the galleries (790A ) of said common head, said corresponding mount comprising a plurality of corresponding feed apertures (810A; 810B) positioned for fluid communication of said combustion reagents between those galleries and its corresponding plenum.

5. The inlet assembly of any preceding claim, wherein each combustion
chamber module is configured to receive at least one corresponding effluent stream nozzle
extending from said common head and said feed apertures are located to avoid a position of each effluent stream nozzle.

6. The inlet assembly of any preceding claim, wherein each corresponding mount defines at
least one corresponding effluent stream nozzle aperture positioned to receive a corresponding effluent stream nozzle.

7. The inlet assembly of any preceding claim, wherein each corresponding mount comprises at least one corresponding effluent stream nozzle seal positioned to surround each corresponding effluent stream nozzle, preferably wherein said corresponding feed apertures are located to avoid each corresponding effluent stream nozzle seal (840A; 840B).

8. The inlet assembly of any preceding claim, wherein each corresponding mount comprises a corresponding perimeter seal (850A; 850B ) configured to contain said combustion reagents.

9. The inlet assembly of any preceding claim, wherein said common head is configurable to removably provide at least one additional effluent stream nozzle extending from said common head for enhanced combustion chamber modules.

10. The inlet assembly of any of claims 1-8, wherein at least one combustion chamber module is an enhanced combustion chamber module, said corresponding mount is configured to receive at least one corresponding additional effluent stream nozzle extending from said common head and said corresponding feed apertures are located to avoid a position of each additional effluent stream nozzle, preferably wherein said corresponding mount of said at least one enhanced combustion chamber module is at least one of: configured to receive a plurality of effluent stream nozzles extending from said common head; and configured to interface with the plurality of galleries of said common head.

11. The inlet assembly of claim 8 , wherein at least one combustion chamber module is other than said at least one enhanced combustion chamber module and said corresponding perimeter seal deviates to avoid a location of said at least one corresponding additional effluent stream nozzle.

12. The inlet assembly of any one of claims 8 to 11, wherein said corresponding mount of said other than said enhanced combustion chamber module is at least one of:
configured to receive a single corresponding effluent stream nozzle extending from said common head; and
configured to interface with a single gallery of said common head.

13. The inlet assembly of any one of claims 8 to 12, wherein each perimeter seal follows a joggling path to avoid said at least one additional effluent stream nozzle.

14. The inlet assembly of any one of claims 8 to 13, wherein said corresponding feed apertures are at least one of:
positioned to avoid said corresponding perimeter seal; and
located follow a deviating path extending around said corresponding perimeter of said corresponding mount.

15. The inlet assembly of any preceding claim, comprising said common head having a plurality of inlets configured to feed said effluent stream combustion reagents to the corresponding plurality of galleries.

## Patentansprüche

1. Einlassanordnung (780A; 780B) für eine Reduktionsvorrichtung (10; 10A; 10B) zum Behandeln eines Abgasstroms von einem Halbleiterverarbeitungswerkzeug, wobei die Einlassanordnung Folgendes umfasst:
eine Vielzahl von Verbrennungskammermodulen (30; 30A; 30B), wobei jedes einen entsprechenden Luftraum definiert, der dazu konfiguriert ist, seiner entsprechenden Verbrennungskammer Verbrennungsreagenzien zuzuführen,
einen gemeinsamen Kopf, der eine Vielzahl von Strecken definiert, die dazu konfiguriert sind, die Verbrennungsreagenzien zuzuführen,
wobei jedes von der Vielzahl von Verbrennungskammermodulen eine entsprechende Befestigung (50; 50A; 50B) aufweist, die dazu konfiguriert ist, mit einer entsprechenden von der Vielzahl von Strecken des gemeinsamen Kopfes verbunden zu sein, und
wobei jede entsprechende Befestigung eine Vielzahl entsprechender Zufuhröffnungen umfasst, die für eine Fluidverbindung der Verbrennungsreagenzien zwischen der entsprechenden einen von der Vielzahl von Strecken und einem entsprechenden Luftraum (100; 100A; 100B) positioniert sind.

2. Einlassanordnung nach Anspruch 1, wobei jeder entsprechende Luftraum (100; 100A; 100B) seine entsprechende Verbrennungskammer (120; 120A; 120B) umgibt und die entsprechenden Zufuhröffnungen so positioniert sind, dass sie den entsprechenden Luftraum überlagern.

3. Einlassanordnung nach Anspruch 1 oder 2, wobei die entsprechenden Zufuhröffnungen (760A, 770A) so positioniert sind, dass sie sich um einen Umfang der entsprechenden Befestigung erstrecken.

4. Einlassanordnung nach einem der vorhergehenden Ansprüche, wobei die entsprechende Befestigung wenigstens eines Verbrennungskammermoduls dazu konfiguriert ist, mit einer Vielzahl der Strecken (790A) des gemeinsamen Kopfes verbunden zu sein, wobei die entsprechende Befestigung eine Vielzahl entsprechender Zufuhröffnungen (810A; 810B) umfasst, die für eine Fluidverbindung der Verbrennungsreagenzien zwischen diesen Strecken und ihrem entsprechenden Luftraum positioniert sind.

5. Einlassanordnung nach einem der vorhergehenden Ansprüche, wobei jedes Verbrennungskammermodul dazu konfiguriert ist, wenigstens eine entsprechende Abgasstromdüse aufzunehmen, die sich von dem gemeinsamen Kopf erstreckt, und die Zufuhröffnungen so positioniert sind, dass sie eine Position jeder Abgasstromdüse meiden.

6. Einlassanordnung nach einem der vorhergehenden Ansprüche, wobei jede entsprechende Befestigung wenigstens eine entsprechende Abgasstromdüsenöffnung, dazu positioniert, eine entsprechende Abgasstromdüse aufzunehmen, definiert.

7. Einlassanordnung nach einem der vorhergehenden Ansprüche, wobei jede entsprechende Befestigung wenigstens eine entsprechende Abgasstromdüsendichtung umfasst, die dazu positioniert ist, jede entsprechende Abgasstromdüse zu umgeben, wobei die entsprechenden Zufuhröffnungen vorzugsweise so positioniert sind, dass sie jede entsprechende Abgasstromdüsendichtung (840A; 840B) meiden.

8. Einlassanordnung nach einem der vorhergehenden Ansprüche, wobei jede entsprechende Befestigung eine entsprechende Umfangsdichtung (850A; 850B) umfasst, die dazu konfiguriert ist, die Verbrennungsreagenzien zu enthalten.

9. Einlassanordnung nach einem der vorhergehenden Ansprüche, wobei der gemeinsame Kopf dazu konfigurierbar ist, für erweiterte Verbrennungskammermodule wenigstens eine zusätzliche Abgasstromdüse bereitzustellen, die sich von dem gemeinsamen Kopf erstreckt.

10. Einlassanordnung nach einem der Ansprüche 1 bis 8, wobei wenigstens ein Verbrennungskammermodul ein erweitertes Verbrennungskammermodul ist, wobei die entsprechende Befestigung dazu konfiguriert ist, wenigstens eine entsprechende zusätzliche Abgasstromdüse aufzunehmen, die sich von dem gemeinsamen Kopf erstreckt, und die entsprechenden Zufuhröffnungen so positioniert sind, dass sie eine Position jeder zusätzlichen Abgasstromdüse meiden, wobei die entsprechende Befestigung des wenigstens einen erweiterten Verbrennungskammermoduls vorzugsweise wenigstens:
dazu konfiguriert ist, eine Vielzahl von Abgasstromdüsen, die sich von dem gemeinsamen Kopf erstrecken, aufzunehmen; und/oder
dazu konfiguriert ist, mit der Vielzahl von Strecken des gemeinsamen Kopfes verbunden zu sein.

11. Einlassanordnung nach Anspruch 8, wobei wenigstens ein Verbrennungskammermodul von dem wenigstens einen erweiterten Verbrennungskammermodul verschieden ist und die entsprechende Umfangsdichtung so abweicht, dass eine Position der wenigstens einen entsprechenden zusätzlichen Abgasstromdüse zu meidet.

12. Einlassanordnung nach einem der Ansprüche 8 bis 11, wobei die entsprechende Befestigung des von dem erweiterten Verbrennungskammermodul verschiedenen Moduls wenigstens:
dazu konfiguriert ist, eine einzelne entsprechende Abgasstromdüse, die sich von dem gemeinsamen Kopf erstreckt, aufzunehmen; und/oder
dazu konfiguriert ist, mit einer einzelnen Strecke des gemeinsamen Kopfes verbunden zu sein.

13. Einlassanordnung nach einem der Ansprüche 8 bis 12, wobei jede Umfangsdichtung einer gezahnten Bahn folgt, um die wenigstens eine zusätzliche Abgasstromdüse zu meiden.

14. Einlassanordnung nach einem der Ansprüche 8 bis 13, wobei die Zufuhröffnungen wenigstens:
so positioniert sind, dass sie die entsprechende Umfangsdichtung meiden; und/oder
so angeordnet sind, dass einer abweichenden Bahn folgen, die sich um den entsprechenden Umfang der entsprechenden Befestigung erstreckt.

15. Einlassanordnung nach einem der vorhergehenden Ansprüche, umfassend
den gemeinsamen Kopf, der eine Vielzahl von Einlässen aufweist, die dazu konfiguriert sind, die Abgasstromverbrennungsreagenzien der entsprechenden Vielzahl von Strecken zuzuführen.

## Revendications

1. Ensemble d'admission (780A ; 780B) pour un appareil de réduction (10 ; 10A ; 10B), destiné à traiter un flux d'effluent provenant d'un outil de traitement de semi-conducteurs, ledit ensemble d'admission comprenant :
une pluralité de modules de chambre de combustion (30 ; 30A ; 30B), chacun définissant une chambre de distribution correspondante conçue pour fournir des réactifs de combustion à sa chambre de combustion correspondante,
une tête commune définissant une pluralité de galeries conçues pour fournir lesdits réactifs de combustion,
chacun de ladite pluralité de modules de chambre de combustion ayant un support correspondant (50 ; 50A ; 50B) conçu pour se connecter à une galerie correspondante parmi la pluralité de galeries de ladite tête commune, et
chaque support correspondant comprenant une pluralité d'ouvertures d'alimentation correspondantes prévues pour la communication fluidique desdits réactifs de combustion entre ladite galerie correspondante parmi la pluralité de galeries et une chambre de distribution correspondante (100 ; 100A ; 100B).

2. Ensemble d'admission selon la revendication 1,
dans lequel chaque chambre de distribution correspondante (100 ; 100A ; 100B) entoure sa chambre de combustion correspondante (120 ; 120A ; 120B), et lesdites ouvertures d'alimentation correspondantes sont situées de manière à recouvrir ladite chambre de distribution correspondante.

3. Ensemble d'admission selon la revendication 1 ou 2,
dans lequel lesdites ouvertures d'alimentation correspondantes (760A, 770A) sont situées de manière à s'étendre autour d'un périmètre dudit support correspondant.

4. Ensemble d'admission selon l'une des revendications précédentes,
dans lequel ledit support correspondant d'au moins un module de chambre de combustion est conçu pour se connecter à une pluralité des galeries (790A) de ladite tête commune, ledit support correspondant comprenant une pluralité d'ouvertures d'alimentation correspondantes (810A ; 810B) prévues pour la communication fluidique desdits réactifs de combustion entre ces galeries et sa chambre de distribution correspondante.

5. Ensemble d'admission selon l'une des revendications précédentes,
dans lequel chaque module de chambre de combustion est conçu pour recevoir au moins une buse de flux d'effluent correspondante s'étendant à partir de ladite tête commune, et lesdites ouvertures d'alimentation sont situées de manière à éviter une position de chaque buse de flux d'effluent.

6. Ensemble d'admission selon l'une des revendications précédentes,
dans lequel chaque support correspondant définit au moins une ouverture de buse de flux d'effluent correspondante prévue pour recevoir une buse de flux d'effluent correspondante.

7. Ensemble d'admission selon l'une des revendications précédentes,
dans lequel chaque support correspondant comprend au moins un joint d'étanchéité de buse de flux d'effluent correspondant positionné de manière à entourer chaque buse de flux d'effluent correspondante,
de préférence, lesdites ouvertures d'alimentation correspondantes sont situées de manière à éviter chaque joint d'étanchéité de buse de flux d'effluent correspondant (840A ; 840B).

8. Ensemble d'admission selon l'une des revendications précédentes, dans lequel chaque support correspondant comprend un joint d'étanchéité périphérique correspondant (850A ; 850B) conçu pour contenir lesdits réactifs de combustion.

9. Ensemble d'admission selon l'une des revendications précédentes, dans lequel ladite tête commune est conçue pour fournir de manière amovible au moins une buse de flux d'effluent supplémentaire, s'étendant à partir de ladite tête commune, pour obtenir les modules de chambre de combustion améliorée.

10. Ensemble d'admission selon l'une des revendications 1 à 8,
dans lequel au moins un module de chambre de combustion est un module de chambre de combustion améliorée,
ledit support correspondant est conçu pour recevoir au moins une buse de flux d'effluent supplémentaire correspondante s'étendant à partir de ladite tête commune, et lesdites ouvertures d'alimentation correspondantes sont situées de manière à éviter une position de chaque buse de flux d'effluent supplémentaire,
de préférence, ledit support correspondant dudit au moins un module de chambre de combustion améliorée est conçu pour recevoir une pluralité de buses de flux d'effluent s'étendant à partir de ladite tête commune ; et/ou est conçu pour se connecter à la pluralité de galeries de ladite tête commune.

11. Ensemble d'admission selon la revendication 8,
dans lequel au moins un module de chambre de combustion est autre que ledit au moins un module de chambre de combustion améliorée, et ledit joint d'étanchéité périphérique correspondant est dévié pour éviter un emplacement de ladite au moins une buse de flux d'effluent supplémentaire correspondante.

12. Ensemble d'admission selon l'une des revendications 8 à 11,
dans lequel ledit support correspondant dudit module autre que ledit module de chambre de combustion améliorée est conçu pour recevoir une seule buse de flux d'effluent correspondante s'étendant à partir de ladite tête commune ; et/ou est conçu pour se connecter à une seule galerie de ladite tête commune.

13. Ensemble d'admission selon l'une des revendications 8 à 12,
dans lequel chaque joint d'étanchéité périphérique suit un trajet en zigzag pour éviter ladite au moins une buse de flux d'effluent supplémentaire.

14. Ensemble d'admission selon l'une des revendications 8 à 13,
dans lequel lesdites ouvertures d'alimentation correspondantes sont positionnées de manière à éviter ledit joint d'étanchéité périphérique correspondant ; et/ou sont situées de manière à suivre un trajet dévié s'étendant autour de la périphérie correspondante dudit support correspondant.

15. Ensemble d'admission selon l'une des revendications précédentes,
comprenant ladite tête commune munie d'une pluralité d'admissions conçues pour amener lesdits réactifs de combustion du flux d'effluent vers la pluralité de galeries correspondantes.
